(19) **Europäisches Patentamt**

**European Patent Office**

**Office européen des brevets**

(11) **EP 0 940 175 B2**

(12) **NOUVEAU FASCICULE DE BREVET EUROPEEN**

(45) Date de publication et mention de la décision concernant l'opposition:
**01.10.2003  Bulletin 2003/40**

(51) Int Cl.⁷: **B01J 20/18**, B01D 53/04

(45) Mention de la délivrance du brevet:
**06.12.2000  Bulletin 2000/49**

(21) Numéro de dépôt: **99400431.5**

(22) Date de dépôt: **23.02.1999**

(54) **Utilisation d'un adsorbant à taux d'échange hétérogène dans un procédé PSA**

Verwendung eines Adsorptionsmittels mit heterogenem Austauschgrad beim PSA Verfahren

Use of adsorbent with heterogeneous exchange degree in a PSA process

(84) Etats contractants désignés:
**CH DE ES FR GB IT LI NL**

(30) Priorité: **03.03.1998  FR 9802557**

(43) Date de publication de la demande:
**08.09.1999  Bulletin 1999/36**

(73) Titulaire: **L'air Liquide, S.A. à Directoire et Conseil de Surveillance pour l'Etude et l'Exploitation des Procédés Georges Claude**
**75321 Paris Cedex 07 (FR)**

(72) Inventeurs:
  • **Moreau, Serge**
    **78140 Velizy-Villacoublay (FR)**
  • **Labasque, Jacques**
    **78000 Versailles (FR)**
  • **Rouge, Dominique**
    **92240 Malakoff (FR)**

(74) Mandataire: **Pittis, Olivier et al**
**L'Air Liquide, S.A.,**
**Direction de la Propriété Intellectuelle,**
**75, Quai d'Orsay**
**75321 Paris Cedex 07 (FR)**

(56) Documents cités:
**EP-A- 0 591 919**          **EP-A- 0 667 183**
**EP-A- 0 729 782**          **EP-A- 0 908 218**
**DD-A- 229 391**            **US-A- 4 859 217**
**US-A- 5 152 813**          **US-A- 5 268 023**
**US-A- 5 413 625**          **US-A- 5 604 169**

EP 0 940 175 B2

## Description

L'invention concerne l'utilisation d'un adsorbant à taux d'échange hétérogène dans un procédé de type PSA, et plus particulièrement de type VSA, de séparation d'un flux gazeux, en particulier d'un flux gazeux contenant essentiellement de l'oxygène et de l'azote, tel l'air.

Les gaz de l'air, tels notamment l'oxygène et l'azote, présentent un grand intérêt industriel. Actuellement, une des techniques non-cryogéniques utilisées pour produire ces gaz est la technique dite "PSA" (pour Pressure Swing Adsorption), laquelle recouvre non seulement les procédés PSA proprement-dits, mais aussi les procédés analogues, tels les procédés VSA (Vacuum Swing Adsorption) ou MPSA (Mixed Pressure Swing Adsorption), ou TSA (Temperature Swing Adsorption).

Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93% ou plus.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage progressif de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale du procédé.

Actuellement, les zéolites, notamment de type A, chabazite, mordénite et faujasite (X ou LSX pour Low Silica X), sont les adsorbants les plus utilisés dans les procédés PSA.

Les particules zéolitiques contiennent habituellement des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions.

L'échange d'ions est généralement effectué par mise en contact des particules de zéolite non-échangées ou zéolite brute avec une solution d'un ou plusieurs sels métalliques comprenant le où les cations à incorporer dans la structure zéolitique et récupération subséquente des particules de zéolite échangée, c'est-à-dire de zéolite contenant une quantité donnée de cations métalliques. La proportion de cations métalliques introduits dans la structure zéolitique par rapport à la capacité totale d'échange est appelée le taux d'échange, lequel est compris entre 0 et 100 %.

Classiquement, il est recommandé d'essayer d'obtenir un adsorbant parfaitement homogène, c'est-à-dire ne présentant pas ou alors le moins possible de variations non seulement de taux d'échange, mais aussi de capacité et/ou de sélectivité.

Cette notion d'adsorbant à taux d'échange homogène apparaît d'ailleurs clairement dans les documents EP-A-486384 et EP-A-606848.

En effet, EP-A-486384 enseigne des mélanges de zéolites A et X ayant un rapport Si/Al égal à $1 \pm 0.003$ et échangées entre 80% et 99% avec des ions calcium, c'est-à-dire un intervalle de taux d'échange dans lequel doit se trouver l'adsorbant, lequel adsorbant est, pour chaque exemple, homogène. Ainsi, ce document décrit des zéolites X échangées à 87% ou, selon le cas, à 96% avec des ions calcium. De là, on s'aperçoit que, si ce document met l'accent sur une possible variation de composition chimique de l'adsorbant puisque le rapport Si/AL est donné à $\pm 0.003$ près, il n'en va pas de même en ce qui concerne le taux d'échange qui est considéré comme étant homogène et unique pour chaque adsorbant industriel considéré, par exemple un taux d'échange égal à 87% ou 96%.

De même, le document EP-A-606848 divulgue, là encore, des plages de taux d'échange, dans lesquelles doivent se trouver les adsorbants à utiliser, mais non le degré d'homogénéité de l'adsorbant.

En d'autres termes, ces documents ni ne décrivent, ni ne prennent en compte l'existence de possibles fluctuations de taux d'échange de l'adsorbant, c'est-à-dire le degré d'hétérogénéité de celui-ci.

Il s'ensuit qu'actuellement, les adsorbants réputés être de bons adsorbants pour la séparation des gaz, notamment pour la séparation des gaz de l'air par procédé de type PSA, sont ceux dont le taux d'échange est le plus homogène possible, la valeur unique de taux d'échange variant pour chaque application dans une plage donnée.

Plus généralement, aucun document de l'art antérieur n'a montré ou souligné, jusqu'à présent, l'influence que peut jouer le degré d'hétérogénéité de taux d'échange d'un adsorbant donné, et l'impact de ce degré d'hétérogénéité notamment sur les performances d'un procédé PSA mettant en oeuvre un tel adsorbant hétérogène.

Par ailleurs, les adsorbants les plus utilisés dans les procédés de séparation de gaz, en particulier de l'air, sont des zéolites, notamment de type X ou LSX, fortement échangées, en général à plus de 80%, voire à plus de 88%, avec cations de métaux très coûteux, tels notamment des cations lithium.

Habituellement, une faujasite échangée au lithium est préparée à partir d'une faujasite contenant essentiellement des cations sodium et potassium, qui est mise en contact avec une solution de sels de lithium, tel le chlorure de lithium. Il se produit alors une substitution des ions sodium et/ou potassium inclus dans la structure tridimensionnelle de la zéolite par des ions lithium. L'état d'avancement de l'échange d'ions se caractérise par le taux d'échange, qui est égal à la proportion de sites cationiques associés aux atomes d'aluminium en position tétraédrique occupés par des cations lithium. A ce titre, on peut citer les documents US-A-4,859,217 ou US-A-5,268,023.

Or, le fait de ne pouvoir utiliser pour séparer les mélanges gazeux que des zéolites, notamment fortement échangées, dont le taux d'échange est totalement homogène engendre une augmentation inévitable et considérable des coûts globaux de fabrication de l'adsorbant et, par conséquent, des coûts du procédé de séparation et des gaz ainsi produits.

En effet, les coûts de préparation industrielle des adsorbants, telles les zéolites, échangés avec des cations métalliques, tel le lithium, sont en grande partie dus au prix élevé des sels de métaux mis en oeuvre car, comme le souligne le document EP-A-65948, pour permettre un échange correct et homogène de la zéolite, il est en général nécessaire d'utiliser une quantité considérable de solution de sels métalliques, tel le chlorure de lithium. Il s'ensuit aussi un taux de déchet important étant donné qu'il est alors- nécessaire d'effectuer un contrôle de qualité rigoureux et une sélection sévère des adsorbants après leur fabrication.

Néanmoins, aucun document de l'art antérieur ne fournit une quelconque indication quant à la possibilité d'utiliser un adsorbant présentant un certain degré d'hétérogénéité. Au contraire, il est habituellement préconisé de faire percoler la solution de sels métalliques au travers de l'adsorbant jusqu'à ce que la concentration en ions s'équilibre et devienne uniforme à travers le lit adsorbant, c'est-à-dire de composition homogène, comme le rappelle le document US-A-5604169.

Par ailleurs, le document US-A-4,859,217 décrit des zéolites X échangées au lithium utilisables pour la séparation des gaz, notamment de l'air par procédé PSA. Les particules de zéolites sont obtenues par échange d'ions, après consommation d'au minimum 4 stoechiométries, voire de 6, 10 ou 12 stoechiométries, de solutions de chlorure de lithium. Les particules de zéolites ainsi fabriquées ont un taux d'échange compris entre 80 et 100 %. L'enseignement du document US-A-5,413,625 est assez similaire à celui du document US-A-4,859,217.

Le but de la présente invention est donc de proposer un adsorbant à taux d'échange hétérogène utilisable en procédé PSA dont les performances restent acceptables du point de vue industriel, malgré le degré d'hétérogénéité des propriétés d'adsorption des différentes particules d'adsorbant et un procédé de séparation de gaz utilisant un tel adsorbant hétérogène, en particulier un procédé PSA de séparation des gaz de l'air.

Ainsi, à performances équivalentes, le procédé utilisant un adsorbant hétérogène selon l'invention conduit à un coût de fabrication nettement moindre que celui d'un adsorbant homogène selon l'art antérieur, étant donné qu'il permet une flexibilité plus importante au niveau des caractéristiques d'échange de l'adsorbant; on entend par adsorbant, un produit de type unique, par exemple une zéolite donnée, telle notamment une zéolite de type A ou une zéolite de type X ou LSX.

En d'autres termes, l'adsorbant hétérogène industriel utilisé dans le procédé PSA de selon l'invention peut être fabriqué à un coût moindre que les adsorbants classiques car le degré d'hétérogénéité de celui-ci permet de faciliter la conduite de la fabrication, tant en ce qui concerne la consommation de sels échangeables que la régulation des paramètres du procédé de production et les dépenses de contrôle de qualité; les différences de performances de l'adsorbant selon l'invention lors de sa mise en oeuvre dans un procédé PSA étant, quant à elles, négligeables par rapport à un adsorbant classique homogène et donc plus cher.

La présente invention concerne alors un procédé PSA (Pressure Swing Adsorption) de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé, caractérisé en ce que ledit au moins un adsorbant est un adsorbant hétérogène pour la séparation de gaz comprenant des particules d'au moins une zéolite contenant au moins un cation métallique échangé choisi parmi les cations monovalents, divalents et trivalents, ladite zéolite ayant une distribution de taux d'échange de moyenne donnée supérieure à 0% et inférieure à 100%, de préférence de 10% à 99%, et ayant un écart-type de distribution de taux d'échange compris entre 0.3% et 5%.

Le taux d'échange exprimé en % est la proportion de cations métalliques échangés par rapport à la capacité maximale d'échange dans la phase zéolitique.

En pratique, une propriété distribuée de manière hétérogène dans un milieu donné peut être étudiée par des prélèvements dont le nombre dépend du degré de précision souhaité. Ainsi, on peut effectuer l'analyse sur un nombre d'échantillons de particules d'adsorbant compris entre 20 et 100 par exemple. Dans tous les cas, l'échantillon doit être de taille suffisante pour pouvoir réaliser une analyse chimique complète, soit de une à quelques particules lorsque celles-ci ont une dimension de l'ordre du millimètre. Les prélèvements d'échantillons sont effectués suivant les règles de l'échantillonnage.

Les deux grandeurs principales d'une distribution sont la moyenne $\mu$ et l'écart-type $\sigma$ de ladite distribution, avec:

$$\mu = \int f(x).dx \qquad et \qquad \sigma^2 = \int (f(x)-\mu)^2.dx$$

où f est la densité de probabilité de la distribution de taux d'échange.

En outre, un autre grandeur significativement intéressante est l'étalement $\delta$ de la distribution, c'est-à-dire la différence entre la plus grande et la plus petite valeur mesurée sur un échantillon donné. En pratique, lors d'un échange industriel de particules d'adsorbant avec une solution de sels métalliques, il existe obligatoirement une plus grande valeur du taux d'échange correspondant aux particules de zéolite les plus échangées et une plus petite valeur du taux d'échange correspondant aux particules de zéolite les moins échangées.

Il en découle qu'un procédé d'échange d'ions étant basé sur une mise en contact plus ou moins progressive d'une solution ionique d'échange avec les particules de zéolite, il existe souvent un gradient de taux d'échange orienté suivant une direction préférentielle, par exemple la direction de circulation de la solution d'échange à l'intérieur des colonnes d'échange.

Dans ce cas particulier, il existe alors une relation entre l'étalement $\delta$ et l'écart-type $\sigma$, à savoir:

$$\delta \cong 2.(\sqrt{3}).\sigma$$

L'étalement $\delta$ dépend donc étroitement des conditions de l'échange et il s'ensuit alors qu'il est très difficile et très coûteux de le réduire à zéro, ainsi que le recommande les documents de l'art antérieur qui préconisent d'utiliser des adsorbants les plus homogènes possibles. L'étalement va donc se traduire par un produit hétérogène ayant un écart-type $\sigma$ lié à l'étalement $\delta$, tel qu'expliqué ci-avant.

Selon le cas, l'adsorbant hétérogène utilisé dans le procédé de l'invention peut inclure l'une ou plusieurs des caractéristiques suivantes:

- l'écart-type de distribution de taux d'échange est compris entre 0.5% et 4%, de préférence entre 0.7% et 3%, avantageusement entre 1% et 2%,
- la zéolite est choisie parmi les zéolites A, mordénite, faujasite, chabazite, clinoptilolite, ZSM-3 et ZSM-5, de préférence la zéolite est une zéolite X ou LSX,
- les cations sont choisis dans le groupe formé par les cations lithium, sodium, calcium, zinc, cuivre, aluminium, manganèse, potassium, strontium ou nickel et leurs mélanges, de préférence parmi les cations lithium, calcium et potassium,
- la zéolite contient au moins 50% de cations lithium et/ou au moins 10% de cations calcium et/ou au moins 5% de cations zinc,
- il présente un rapport Si/Al de 1 à 1.25, de préférence d'environ 1 à 1.1.
- il comprend au moins une zéolite choisie dans le groupe formé par une faujasite échangée avec des ions lithium dont le taux d'échange moyen est compris entre 70% et 88%, une faujasite échangée avec des ions lithium dont le taux d'échange moyen est compris entre 88% et 93%, et une faujasite échangée avec des ions lithium dont le taux d'échange moyen est compris entre 93% et 99%,
- il comprend au moins une zéolite choisie dans le groupe formé par une faujasite échangée avec des ions calcium dont le taux d'échange moyen est compris entre 65% et 95%,
- il comprend au moins une zéolite choisie dans le groupe formé par une faujasite échangée avec des ions calcium et/ou lithium et contenant, en outre, des cations sodium et/ou potassium.

L'adsorbant hétérogène utilisé dans le procédé PSA de l'invention peut être obtenu par un procédé de fabrication, dans lequel :

- on fait percoler une solution d'au moins un sel d'un métal monovalent, divalent ou trivalent, au travers d'au moins une colonne d'échange d'ions contenant des particules de zéolite,
- on arrête la percolation avant d'avoir consommé une quantité dudit sel métallique égale à 4 stoechiométries, et
- on homogénéise la teneur en métal monovalent, divalent ou trivalent desdites particules de zéolite sans faire varier la quantité totale dudit métal contenue dans lesdites particules et de manière à obtenir un écart-type de distribution de taux d'échange compris entre 0.3% et 5%, de préférence, entre 0.5% et 4%, préférentiellement encore entre 0.7% et 3%, avantageusement entre 1% et 2%.

De préférence, on homogénéise la teneur en métal de la zéolite par mise en recirculation en boucle fermée d'au moins une partie de la solution de sel métallique.

Préférentiellement, le sel est un chlorure, le métal est choisi parmi le lithium, le calcium, le sodium, le zinc et leurs mélanges, et/ou la zéolite est une faujasite dont le rapport Si/Al est d'environ 1, c'est-à-dire une zéolite LSX.

Selon le cas, le procédé PSA de l'invention peut comprendre l'une ou plusieurs des caractéristiques suivantes :

- le flux gazeux à séparer comprend un composé polaire, notamment de l'azote et/ou du CO, et au moins un composé moins polaire, notamment de l'oxygène et/ou de l'hydrogène, et, de préférence le flux gazeux est de l'air, le premier composé étant l'azote et le deuxième composé étant l'oxygène; l'air étant, dans le cadre de la présente invention, l'air contenu à l'intérieur d'un batiment ou d'une enceinte chauffée ou non, ou l'air extérieur, c'est-à-dire dans les conditions atmosphériques, pris tel quel ou éventuellement prétraité,
- !e premier composé est l'azote et le deuxième composé est l'oxygène; et on produit un flux gazeux riche en oxygène, c'est-à-dire comprenant, en général, au moins 90% d'oxygène.
- il est de type VSA (Vacuum Swing Adsorption) ou TSA (Temperature Swing Adsorption),
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa,
- - la température d'alimentation est comprise entre 10°C et 80°C, de préférence entre 25°C et 60°C.

Un dispositif susceptible de mettre en oeuvre le procédé PSA sus-décrit, comprend au moins un adsorbeur et, préférentiellement, de 1 à 3 adsorbeurs.

En outre, il faut noter que la présente invention s'applique aussi à chacun des adsorbeurs d'un procédé mettant en oeuvre plusieurs adsorbants, par exemple un procédé multilits.

L'invention va maintenant être décrite plus en détail à l'aide d'exemples donnés à titre illustratif, mais non limitatif.

Exemples

Pour préparer un adsorbant hétérogène selon l'invention, par exemple une zéolite de type faujasite échangée au lithium, on procède comme suit.

D'abord, on fait percoler une solution du sel métallique choisi, tel un chlorure de lithium, au travers d'une ou plusieurs colonnes d'échange d'ions contenant les particules de zéolite sodique, comme décrit classiquement dans l'art antérieur, mais en arrêtant la percolation avant d'avoir consommé une quantité de sel de lithium égale à 4 stoechiométries.

On utilise pour cela, par exemple, un ensemble de 4 colonnes A, B, C et D d'échange d'ions placées en série, c'est-à-dire que la sortie d'une colonne n est reliée à l'entrée d'une colonne n+1, telles que, à intervalles réguliers, la colonne A placée le plus en amont, c'est-à-dire vers la source du flux de sel de lithium, est vidée des particules de zéolites qu'elle contient, subit éventuellement un ou des traitements annexes (rinçage, homogénéisation...), remplie de nouvelles particules de zéolite, puis placée en aval des autres colonnes B, C et D.

Par exemple, un traitement annexe pour ajuster l'étalement de la distribution de taux d'échange, des zéolites contenues dans une colonne A, à une valeur donnée comprise entre 1% et 15%, par, exemple une valeur égale à environ 4%, peut consister à réaliser une homogénéisation de la distribution de taux d'échange par recirculation de la solution de lithium en boucle fermée, de manière à ce que la solution de sel de lithium sortant de la colonne A soit réintroduite en entrée de ladite colonne A, et cela à plusieurs reprises.

Cette recirculation peut être réalisée avec une même solution de sel de lithium ou avec une solution différente, c'est-à-dire que la solution utilisée pendant le traitement annexe peut être ou non la même solution que celle utilisée pendant la phase d'échange proprement-dite; de même en ce qui concerne la concentration en lithium, le débit et/ou la température.

Durant ce traitement annexe, la quantité totale en lithium présente dans la zéolite ne varie pas pour une même solution, mais est seulement redistribuée pour amener l'étalement de taux d'échange à la valeur choisie entre 1% et 15%, par exemple 4%.

Le paramètre important de la mise en circulation est le taux de recirculation (TR), exprimé comme étant le rapport de stoechiométrie entre la quantité totale de solution recirculée et la capacité d'échange de la zéolite et donné par la formule suivante :

$$TR = \frac{D \cdot t \cdot C_s}{M_z \cdot C_z}$$

dans laquelle:

- D est le débit de solution (en $I.s^{-1}$),
- t est la durée de recirculation (en s),
- $C_s$ est la normalité de la solution (en $eq.I^{-1}$),
- $M_z$ est la masse d'adsorbant (en kg) concernée par la recirculation,
- $C_z$ est la capacité d'échange de l'adsorbant (eq/kg).

Dans la cas d'un échange en colonne avec débit axial, le gradient de taux d'échange varie continument selon l'axe.

Ainsi, les exemples 1 et 2 ci-après décrivent des zéolites de type faujasite échangées, avec des ions lithium dont la différence entre le taux d'échange maximal et le taux d'échange minimal, c'est-à-dire l'étalement, est égal à 4% environ.

Bien entendu, l'échange d'ion et le traitement annexe peuvent être effectués dans une même colonne d'échange ou dans des colonnes différentes, ou dans une cuve dans laquelle la solution est mise en mouvement par des moyens adéquats.

La zéolite ainsi obtenue présente un étalement du taux d'échange au lithium compris entre 1% et 15%, c'est-à-dire une certaine hétérogénéité de taux d'échange.

La synthèse d'une telle zéolite hétérogène nécessite une consommation moindre de sel de lithium et donc une diminution des coûts, en particulier pour les taux d'échange élevés.

Exemple 1

En appliquant le procédé de l'invention, décrit ci-dessus, on a fabriqué un adsorbant hétérogène selon l'invention constitué de particules zéolitiques de type faujasite, ayant un rapport Si/AI de l'ordre de 1, échangées avec des ions lithium et dont le taux d'échange moyen est de 86% et l'étalement de 4%, c'est-a-dire ici des particules zéolitiques échangées de 84% à 88%.

Pour ce faire, on a utilisé une solution de chlorure de lithium ayant une concentration 1.4N. L'échange d'ions est réalisé à une température de 100°C environ et les débits sont réglés de manière à ce que le taux d'échange moyen de la zéolite soit de 86%, après échange.

Dans ces conditions, l'étalement initial, obtenu après l'étape d'échange d'ions, est de 33%, c'est-à-dire qu'on obtient un mélange de particules de zéolite dont les particules les moins échangées contiennent 66% de lithium et les particules les plus échangées contiennent 99% de cations lithium.

Les stoechiométries mises en jeu pour l'obtention de ce profil de distribution en régime stationnaire, c'est-à-dire la quantité de lithium percolée à travers chaque colonne, sont d'environ 1.17, ce qui est nettement inférieur aux valeurs de stoechiométrie de l'art antérieur qui sont habituellement comprises entre 4 et 12.

A ce stade, la zéolite est inutilisable telle quelle, étant donné que les propriétés d'adsorption varient d'un facteur 3 environ selon le taux d'échange des particules considérées, à savoir de 66% à 99%.

On opère alors une recirculation en circuit fermé de la solution de chlorure de lithium ayant servi à l'échange d'ions, dans les mêmes conditions de température et de concentration.

On obtient alors une diminution progressive de l'écart-type et de l'étalement de la distribution de taux d'échange, mais sans modification de la valeur moyenne de taux d'échange, à savoir 86%. Les résultats sont donnés dans le tableau I suivant.

Tableau 1

| Taux de recirculation (TR) | Etalement maximal de taux d'échange |
|---|---|
| 0 | 33% |
| 3 | 6% |
| 4 | 4% |

De là, en jouant sur la durée, la concentration ou le débit de recirculation, on atteint le degré d'hétérogénéité souhaité.

En d'autres termes, l'étalement maximal de taux d'échange de l'adsorbant hétérogène zéolitique obtenu est de 4% pour une valeur moyenne de taux d'échange de 86%; l'étalement maximal de taux d'échange correspondant à la variation de taux d'échange entre le taux d'échange maximal et le taux d'échange minimal.

L'écart-type de la distribution de taux d'échange obtenu est alors d'environ 1.2%, c'est-à-dire qu'il est bien compris dans les plages revendiquées par la présente invention, notamment dans la plage 0.3% à 5%.

Exemple 2

En procédant comme dans l'exemple 1 ci-dessus, on a fabriqué un adsorbant hétérogène constitué de particules zéolitiques de type faujasite (Si/Al de 1 environ) échangées avec des cations lithium et dont le taux d'échange varie entre 95 et 99% pour une valeur moyenne de taux d'échange de 97.5%. Ici, comme dans l'exemple 1, l'étalement de taux d'échange est de 4% environ.

Les stoechiométries mises en jeu, dans ce cas, sont d'environ 1.90, ce qui est, là encore, nettement inférieur aux valeurs de stoechiométrie de l'art antérieur (entre 4 et 12).

Les zéolites hétérogènes des exemples 1 et 2 sont susceptibles d'être mises en oeuvre dans un procédé PSA, de préférence VSA, de séparation des gaz de l'air. En effet, il a été constaté que, de manière fort surprenante, les performances d'un procédé VSA sont maintenues jusqu'à un écart-type de la distribution de taux d'échange de l'adsorbant pouvant atteindre des valeurs de 4%, voire jusqu'à 7%.

En d'autres termes, contrairement à l'enseignement de l'art antérieur, il est désormais possible d'utiliser dans un procédé PSA, en particulier VSA, un adsorbant hétérogène tel celui de l'invention

Or, un adsorbant hétérogène étant moins cher qu'un adsorbant homogène classique, une unité PSA, par exemple une unité VSA pour la production d'oxygène, comprenant un ou plusieurs adsorbeurs remplis d'un adsorbant hétérogène selon la présente invention conduit à une réduction notable du coût de production du gaz, en particulier de l'oxygène, par rapport à un procédé classique mettant en oeuvre un adsorbant homogène.

Exemple 3

Afin d'illustrer la présente invention, on a représenté sur les figures 1 à 4 des courbes comparatives de profils possibles de taux d'échange et de distribution du taux d'échange pour différents adsorbants.

Plus précisément:

- la Figure 1 représente un schéma de trois profils possibles de taux d'échange suivant l'axe de la colonne d'échange d'ions dans laquelle est mis en oeuvre un procédé d'échange d'ions, pour un taux d'échange moyen de 81,6% dans trois cas a1, a2 et a3;
- la Figure 2 représente un schéma analogue de celui de la Figure 1 montrant les courbes de profils possibles correspondant à un taux d'échange moyen de 94.2% (cas b1, b2 et b3);
- la Figure 3 représente un schéma des distributions de taux d'échange pour un taux d'échange moyen de 81.6% correspondant aux profils de taux d'échange de la Figure 1 (cas a1, a2 et a3); et
- la Figure 4 représente un schéma des distributions de taux d'échange pour un taux d'échange moyen de 94.2% correspondant aux profils de taux d'échange de la Figure 2 (cas b1, b2 et b3).

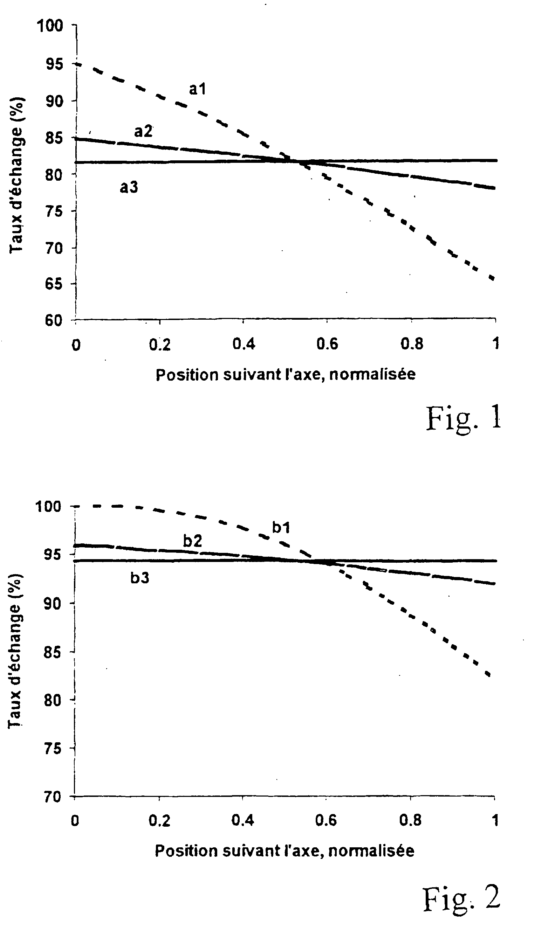

Les caractéristqiues des distributions découlant des Figures 1 à 4 sont illustrées dans le tableau II suivant.

Tableau II

| | Distribution de taux d'échange (en %) | | | |
|---|---|---|---|---|
| Cas | Moyenne (μ) | Ecart-type (σ) | Etalement (δ) | Essai conforme à l'invention |
| a1 | 81.6 | 9.3 | 30 | non |
| a2 | 81.6 | 2.2 | 7 | oui |
| a3 | 81.6 | 0 | 0 | non |
| b1 | 94.2 | 5.8 | 18.1 | non |
| b2 | 94.2 | 1.3 | 4 | oui |
| b3 | 94.2 | 0 | 0 | non |

Il apparaît, au vu du Tableau II, que seuls les cas a2 et b2 sont conformes à la présente invention, c'est-à-dire qu'ils présentent une distribution de taux d'échange adéquate.

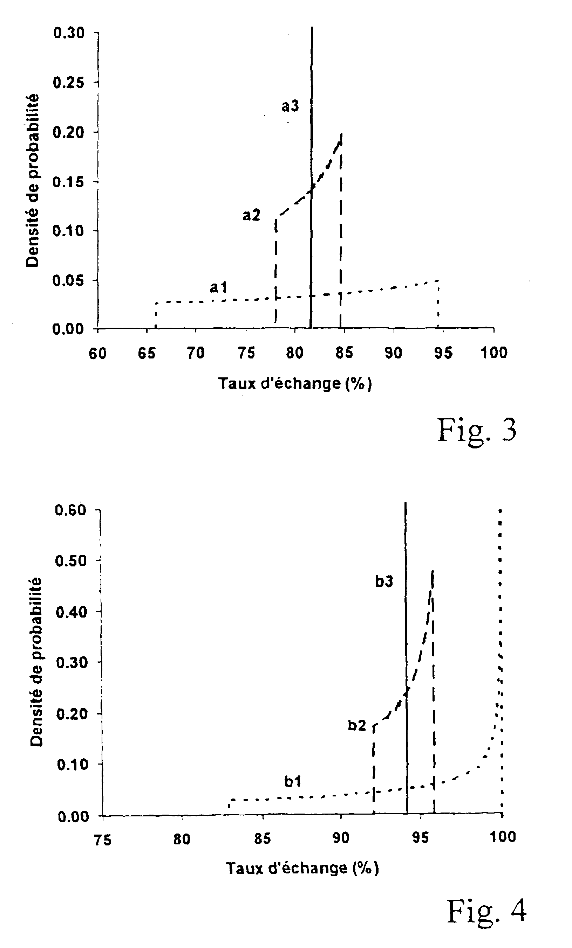

A l'inverse, les cas a1 et b1, bien que présentant une distribution hétérogène, n'entrent pas dans le cadre de l'invention car présentant, en outre, une distribution du taux d'échange trop large; cela apparaît d'ailleurs nettement sur les Figures 3 et 4.

Par ailleurs, les essais a3 et b3 présentent, quant eux, une distribution homogène n'entrant pas dans le cadre de l'invention car conforme à l'enseignement de l'art antérieur; cela apparaît d'ailleurs nettement sur les Figures 3 et 4.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

**Revendications**

1. Procédé PSA de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé,

   **caractérisé en ce que** ledit au moins un adsorbant est un adsorbant hétérogène comprenant des particules d'au moins une zéolite contenant au moins un cation métallique échangé choisi parmi les cations monovalents, divalents et/ou trivalents, ladite zéolite ayant une distribution de taux d'échange de moyenne donnée supérieure à 0% et inférieure à 100%, et ayant un écart-type de distribution de taux d'échange compris entre 0,3% et 5%.

2. Procédé selon la revendication 1, **caractérisé en ce que** l'écart-type de distribution de taux d'échange de l'adsorbant est compris entre 0.7% et 3%, avantageusement entre 1% et 2% environ.

3. Procédé selon l'une des revendications 1 ou 2, **caractérisé en ce que** la zéolite est choisie parmi les zéolites A, mordénite, chabazite, faujasite, clinoptilolite, ZSM-3 et ZSM-5, de préférence la zéolite est une zéolite X ou LSX.

4. Procédé selon l'une des revendications 1 à 3, **caractérisé en ce que** les cations sont choisis dans le groupe formé par les cations lithium, sodium, calcium, zinc, cuivre, aluminium, potassium, strontium, manganèse ou nickel et leurs mélanges, de préférence parmi les cations lithium, calcium et potassium.

5. Procédé selon l'une des revendications 1 à 4, **caractérisé en ce que** la zéolite contient au moins 50% de cations lithium et/ou au moins 10% de cations calcium et/ou au moins 5% de cations zinc.

6. Procédé selon l'une des revendications 1 à 5, **caractérisé en ce que** l'adsorbant présente un rapport Si/Al de 1 à 1.25, de préférence d'environ 1 à 1.1.

7. Procédé selon l'une des revendications 1 à 6, **caractérisé en ce que** la zéolite est choisie dans le groupe formé par une faujasite échangée avec des ions lithium dont le taux d'échange moyen est compris entre environ 70% et environ 88%, une faujasite échangée avec des ions lithium dont le taux d'échange moyen est compris entre environ 88% et environ 93%, et une faujasite échangée avec des ions lithium dont le taux d'échange moyen est compris entre environ 93% et environ 99%.

8. Procédé selon l'une des revendications 1 à 6, **caractérisé en ce que** la zéolite est choisie dans le groupe formé par une faujasite échangée avec des ions calcium dont le taux d'échange moyen est compris entre environ 65% et environ 95%.

9. Procédé selon la revendication 1, **caractérisé en ce que** le flux gazeux à séparer comprend de l'azote en tant que premier composé polaire et de l'oxygène en tant que deuxième composé moins polaire.

10. Procédé selon l'une des revendications 1 à 9, **caractérisé en ce que** le flux gazeux est de l'air, le premier composé étant l'azote et le deuxième composé étant l'oxygène.

11. Procédé selon l'une des revendications 1 à 10, **caractérisé en ce qu'**il est de type VSA.

12. Procédé selon l'une des revendications 1 à 8, **caractérisé en ce que** le flux gazeux à séparer comprend du CO en tant que premier composé polaire et de l'hydrogène en tant que deuxième composé moins polaire.


**Patentansprüche**

1. Druckwechseladsorptionsverfahren zur Trennung eines Gasstroms, der mindestens eine erste Verbindung, die an mindestens einem Adsorptionsmittel bevorzugt adsorbiert wird, und mindestens eine zweite Verbindung, die an dem mindestens einen Adsorptionsmittel weniger bevorzugt adsorbiert wird als die erste Verbindung, enthält, **dadurch gekennzeichnet, daß** es sich bei dem mindestens einen Adsorptionsmittel um ein heterogenes Adsorptionsmittel enthaltend Teilchen aus mindestens einem Zeolith, der mindestens ein ausgetauschtes Metallkation aus der Gruppe bestehend aus einwertigen, zweiwertigen und/oder dreiwertigen Kationen enthält, eine Austauschgradverteilung mit gegebenem Mittelwert von mehr als 0% und weniger als 100% und eine Standardabweichung der Austauschgradverteilung zwischen 0,3 und 5% aufweist, handelt.

2. Verfahren nach Anspruch 1, **dadurch gekennzeichnet, daß** die Standardabweichung der Austauschgradverteilung das Adsorptionsmittels zwischen 0,7 und 3% und vorteilhafterweise zwischen etwa 1 und 2% liegt.

3. Verfahren nach Anspruch 1 oder 2, **dadurch gekennzeichnet, daß** der Zeolith unter Zeolithen A, Mordenit, Chabasit, Faujasit, Clinoptilolith, ZSM-3 und ZSM-5 ausgewählt ist, wobei es sich bei dem Zeolith vorzugsweise um einen Zeolith X oder LSX handelt.

4. Verfahren nach einem der Ansprüche 1 bis 3, **dadurch gekennzeichnet, daß** die Kationen aus der Gruppe bestehend aus Lithium-, Natrium-, Calcium-, Zink-, Kupfer-, Aluminium-, Kalium-, Strontium-, Mangan- oder Nickelkationen und deren Gemischen, vorzugsweise unter Lithium-, Calcium- und Kaliumkationen ausgewählt sind.

5. Verfahren nach einem der Ansprüche 1 bis 4, **dadurch gekennzeichnet, daß** der Zeolith mindestens 50% Lithiumkationen und/oder mindestens 10% Calciumkationen und/oder mindestens 5% Zinkkationen enthält.

6. Verfahren nach einem der Ansprüche 1 bis 5, **dadurch gekennzeichnet, daß** das Adsorptionsmittel ein Si/Al-Verhältnis von 1 bis 1,25, vorzugsweise etwa 1 bis 1,1, aufweist.

7. Verfahren nach einem der Ansprüche 1 bis 6, **dadurch gekennzeichnet, daß** der Zeolith aus der Gruppe bestehend aus einem mit Lithiumionen ausgetauschten Faujasit mit einem mittleren Austauschgrad zwischen etwa 70 und etwa 88%, einem mit Lithiumionen ausgetauschten Faujasit mit einem mittleren Austauschgrad zwischen etwa 88 und etwa 93% und einem mit Lithiumionen ausgetauschten Faujasit mit einem mittleren Austauschgrad zwischen etwa 93 und etwa 99% ausgewählt ist.

8. Verfahren nach einem der Ansprüche 1 bis 6, **dadurch gekennzeichnet, daß** der Zeolith aus der Gruppe bestehend aus einem mit Calciumionen ausgetauschten Faujasit mit einem mittleren Austauschgrad zwischen etwa 65 und etwa 95% ausgewählt ist.

9. Verfahren nach Anspruch 1, **dadurch gekennzeichnet, daß** der zu trennende Gasstrom als ertse, polare Verbindung Stickstoff und als zweite, weniger polare Verbindung Sauerstoff enthält.

10. Verfahren nach einem der Ansprüche 1 bis 9, **dadurch gekennzeichnet, daß** es sich bei denn Gasstrom um Luft handelt, wobei die erste Verbindung Stickstoff und die zweite Verbindung Sauerstoff ist.

**11.** Verfahren nach einem der Ansprüche 1 bis 10, **dadurch gekennzeichnet, daß** es sich um ein Vakuumwechseladsorptionsverfahren handelt.

**12.** Verfahren nach einem der Ansprüche 1 bis 8, **dadurch gekennzeichnet, daß** der zu trennende Gasstrom als erste, polare Verbindung CO und als zweite, weniger polare Verbindung Wasserstoff enthält.

**Claims**

**1.** PSA process for separation of a gas flow containing at least a first compound, being adsorbed preferentially on at least one adsorbent, and at least a second compound, being less preferentially adsorbed on at least the said adsorbent than the said first compound, **characterized in that** the said at least one adsorbent is a heterogeneous adsorbent comprising particles of at least one zeolite containing at least one exchanged metal cation selected from monovalent, divalent and/or trivalent cations, the said zeolite having an exchange-factor distribution of given mean in excess of 0% and less than 100%, and having a standard deviation for the exchange-factor distribution of between 0.3% and 5%.

**2.** Process according to Claim 1, **characterized in that** the standard deviation for the exchange-factor distribution of the adsorbent is between 0.7% and 3%, advantageously between about 1% and 2%.

**3.** Process according to one of Claims 1 and 2, **characterized in that** the zeolite is selected from A zeolites, mordenite, chabazite, faujasite, clinoptilolite, ZSM 3 and ZSM 5, preferably the zeolite is an X or LSX zeolite.

**4.** Process according to one of Claims 1 to 3, **characterized in that** the cations are selected from the group formed by lithium, sodium, calcium, zinc, copper, aluminium, potassium, strontium, manganese or nickel cations and mixtures thereof, preferably from lithium, calcium and potassium cations.

**5.** Process according to one of Claims 1 to 4, **characterized in that** the zeolite contains at least 50% of lithium cations and/or at least 10% of calcium cations and/or at least 5% of zinc cations.

**6.** Process according to one of Claims 1 to 5, **characterized in that** the adsorbent has an Si/Al ratio of from 1 to 1.25, preferably about 1 to 1.1.

**7.** Process according to one of Claims 1 to 6, **characterized in that** the zeolite is selected from the group formed by a faujasite exchanged with lithium ions whose mean exchange factor is between about 70% and about 88%, a faujasite exchanged with lithium ions whose mean exchange factor is between about 88% and about 93%, and a faujasite exchanged with lithium ions whose mean exchange factor is between about 93% and about 99%.

**8.** Process according to one of Claims 1 to 6, **characterized in that** the zeolite is selected from the group formed by a faujasite exchanged with calcium ions whose mean exchange factor is between about 65% and about 95%.

**9.** Process according to Claim 1, **characterized in that** the gas flow to be separated comprises nitrogen as polar first compound and oxygen as less polar second compound.

**10.** Process according to one of Claims 1 to 9, **characterized in that** the gas flow is air, the first compound being nitrogen and the second compound being oxygen.

**11.** process according to one or Claims 1 to 10, **characterized in that** it is of the VSA type.

**12.** Process according to one of Claims 1 to 8, **characterized in that** the gas flow to be separated comprises CO as polar first compound and hydrogen as less polar second compound.

Fig. 1

Fig. 2

Fig. 3

Fig. 4